# EUROPEAN PATENT APPLICATION

(11) **EP 0 525 874 A2**
(43) Date of publication of application: **03.02.1993**
(21) Application number: 92202220.7
(22) Date of filing: 18.07.1992
(51) Int. Cl.: H04J 3/12, H04L 25/36, G06F 5/06

(54) **Asynchronous access FIFO memory buffer with padding flag**

(30) Priority: 31.07.1991 IT MI912132
(71) Applicant: SGS-THOMSON MICROELECTRONICS S.r.l., I-20041 Agrate Brianza (Milano) (IT)
(72) Inventor: Delgrossi, Giovanni, I-20059 Vimercate (Milano) (IT); Dell'Oro, Annalisa, I-20058 Villasanta (Milano) (IT)
(74) Representative: Mittler, Enrico

(57) **Abstract**

In an asynchronous access FIFO memory buffer with output pins for indications or flags (FF, EF) of buffer completely full and buffer completely empty there are also a set of output pins for padding flags (FLO-FL9) with a binary code of the degree of padding of the buffer and pins for flags (HDF; CF) of a preset number of bytes in the memory buffer.

## Description

The present invention relates to an asynchronous access FIFO memory buffer with padding flag.

In the manufacture of equipment for highspeed data transmission networks it is indispensable to use asynchronous memory buffers so that access to the network resources on the part of all users who require the services is processed in a homogeneous manner.

A typical example is the manufacture of the network access protocol (UNI) that must process the requests for services on the part of users who operate in a totally asynchronous manner one with the other and with the network itself.

Currently memory buffers are used that are FIFO-organized (first in, first out), through which data are read in the same order in which they have been stored, but without there being any relationship of frequency or phase between access in writing and that in reading.

In this context it could be useful for the part that receives the communication to know with a given degree of accuracy the level of padding of the buffer in order to avoid the retrieval of incomplete data or, in general, the synchronization with the transmitter's operating frequency.

That has been shown to be particularly useful in package networks, where data are retrieved by the buffer only if it is certain that at least one complete transmissive unit (package) is available. Among the techniques adopted for the implementation of wide-band networks, the package technique is indeed emerging and in particular the ATM technique (Asynchronous Transfer Mode).

The object of the present invention is that of accomplishing a FIFO memory buffer having asynchronous access that, in addition to the indications or flags commonly available in similar devices, also provides some indications or flags suitable for applications in transmission networks based on the ATM technique, as well as the binary code of the padding value updated to the last reading or writing operation.

According to the present invention such object is attained through a FIFO memory buffer having asynchronous access, comprising output pins for indications or flags of buffer completely full and buffer completely empty, characterized in that it also comprises a set of output pins for padding flags with the binary code of the degree of padding of the buffer and two output pins for flags corresponding to a preset number of bytes in the memory buffer.

So as to make the above indications or flags available, said memory buffer preferably comprises a first and a second counter of the bytes written and read, respectively, in the memory buffer, an arithmetic means suitable for calculating the difference between the number of bytes counted by said first and said second counter, a storage register for said difference connected at output to said arithmetic means and provided with said output pins for said flags of buffer completely full and empty, of padding and of preset numbers of bytes in the memory buffer, and a synchronizer suitable for synchronizing the operations of writing/reading the bytes and those of issuing the flags.

One of said preset numbers of bytes in the memory buffer may be equal to a header, that is, 5 bytes, of an ATM cell.

The other preset number of bytes in the memory buffer may be equal to 53 bytes of a memory cell, which is the equivalent of a complete ATM cell.

The flags provided can thus be used directly for specific applications in wide-band networks implemented through the ATM technique. Moreover, through the decoding of the padding flags, it is possible for external devices to generate the flags necessary for different applications.

The extreme flexibility on the flags provided makes this memory of general and specific validity and use for ATM applications.

The features of the present invention shall be made more clear by the following detailed description of an embodiment illustrated as a non-limiting example in the enclosed drawings, wherein:
Fig. 1 illustrates in a schematic form a FIFO memory buffer with a corresponding set of input/output pins;
Fig. 2 illustrates in a schematic form the internal constitution of said memory buffer;
Fig. 3 illustrates a first configuration of signals related to the operation of the memory buffer shown in Fig. 1;
Fig. 4 illustrates a second configuration of the signals illustrated in Fig. 3;
Fig. 5 illustrates a third configuration of the signals illustrated in Fig. 3;
Fig. 6 illustrates a possible use of the signals at output from the memory buffer.

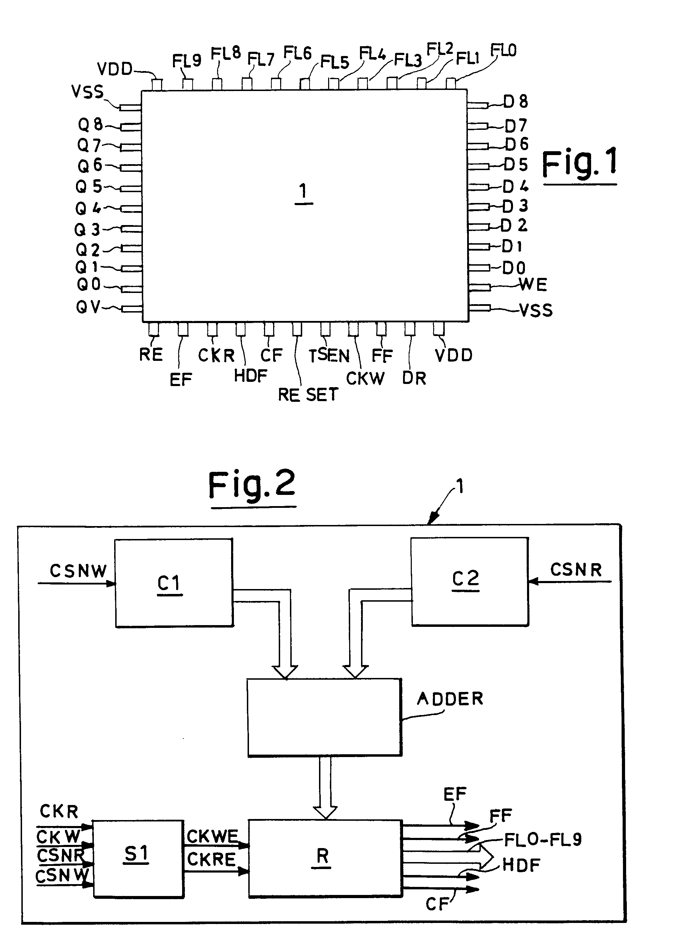

With reference to Fig. 1, a memory buffer of the FIFO type has a set of input data pins DO-D8 and a set of output data pins QO-Q8, a pair of pins RE, WE to enable reading and writing, respectively, a pair of clock input pins for reading CKR and writing CKW and pins QV and DR to enable reading/writing in cascade. It also has a Tristate enabling pin TSEN and a RESET pin as well as naturally pairs of power pins VDD and VSS.

The FIFO memory buffer also has a set of pins for indications or flags FLO-FL9 suitable for providing as a whole the binary code of the degree of padding of the memory, a pin for a completely full memory flag FF, a pin for a completely empty memory flag EF, a pin for a header flag HDF suitable for signalling the presence in the memory of at least 53 bytes, which is the equivalent of a complete ATM memory cell.

Inside the memory buffer of Fig. 1 there are means indicated in the window with 1, suitable for calculating the value of the abovementioend flags.

In particular, as shown in Fig. 2, there is a first and a second counter C1, C2 of the number of bytes written in the memory buffer and read by it, respectively, an arithmetic means ADDER, suitable for calculating the difference between the number of bytes written and those read, at output from the first and second counter C1, C2, respectively, a register R for storing said difference connected at output to the arithmetic means and provided with output pins for the abovementioned flags and a synchornizer S1 suitable for synchronizing the operations of writing/reading the data and those of issuing the flags.

An adder is used as the arithmetic means, complemented to one and decremented by one, that is to say, delayed by one position. In this way it is possible to obtain a difference between binary numbers using a simple adder.

As can be seen in Fig. 2, the inputs of the synchronizer S1 are reading/writing clock CKR/CKW, as well as signals CSNR and CSNW that notify to the respective counters C2 and C1 the request of operation and thus indicate that the updating of the counters C2, C1 and of the ADDER is taking place. The outputs of the synchronizer are two signals CKRE and CKWE that indicate that the adder's outputs are stable and thus the correct values of the flags are available at output.

The signals CSNR and CSNW are impulses having a high phase equal to the maximum switching time T of its counter C2, C1 and of the underlying ADDER; in this way through them a signal is available that indicates when the adder's outputs are stable for each of the reading directions of the flag. The length of the time T depends on the implementation of the logic and on the technology adopted. The constraint is represented by the clock period with which the device is accessed; T must be less than that period in order to leave a margin of time sufficient to provide the data at output and to allow the reader to access it correctly.

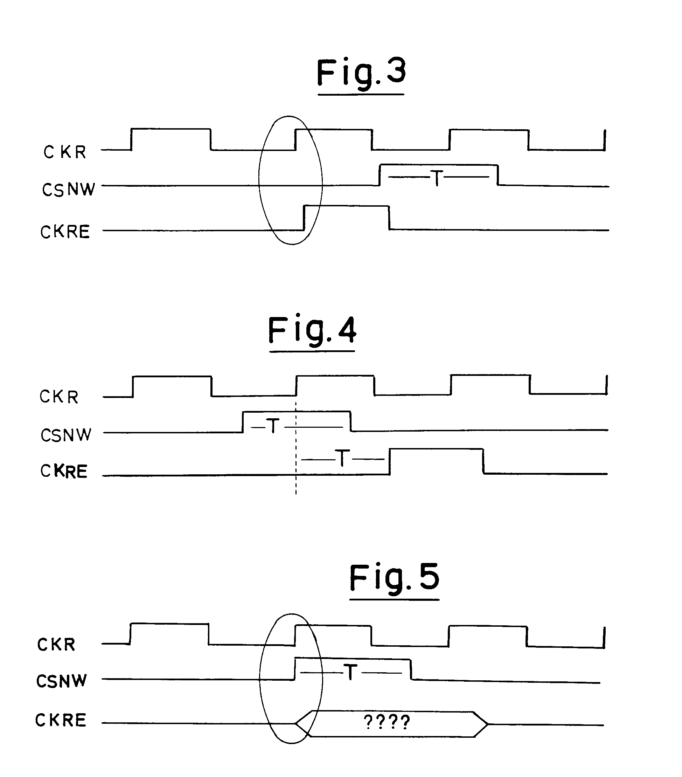

With reference to the operation of reading the available flags, at each leading edge of the reading clock CKR a check is made that there are no writing operations under way through the signal CSNW; if such signal is low, as in Fig. 3, CKRE is immediately activated as if it were the original clock; on the other hand CKRE is delayed by a time T comparable to the time necessary for switching the counter C1 and the ADDER. This holds for the flag set FLO-FL9 corresponding to the degree of padding of the memory, the flag EF of completely empty memory, the header flag HDF suitable for signalling the presence of at least 5 bytes in memory, the cell flag CF suitable for signalling the presence in it of at least 53 bytes.

An identical and symmetrical process is followed for the generation of the completely full memory flag FF.

Since the reading and writing operations have no relationship in frequency or in phase, it is possible that particular situations may take place wherein there is a coincidence of a request for reading the flags and for increasing the counter C1 or vice versa. This may cause an uncertainty in the synchronizer that does not know whether to generate the signal CKRE immediately or after the time T; the proposed architecture causes the synchronizer's behaviour in this case to have no effect for the purpose of correctly reading the flags.

In the case of Fig. 3 the signal CKRE is given immediately at output and the flags are thus immediately available; in the case of Fig. 4 the flags are available after the time T. In the case of Fig. 5 there is an uncertainty and it is not possible to know how the syncronizer will act: in the case wherein the leading edge of the signal CSNW is not detected, the contents of the register R is provided at output immediately and there is the certainty of having stable data because the writing operation has only just started. If, on the other hand, the edge is detected, the outputs shall be provided after a time T and there is thus the certainty of having stable data. The only difference is represented by the value provided at output, that changes due to the fact that the writing operation under way is taken into consideration or not. In any case the correct operation of the memory buffer is guaranteed.

The flags available may be used for different purposes.

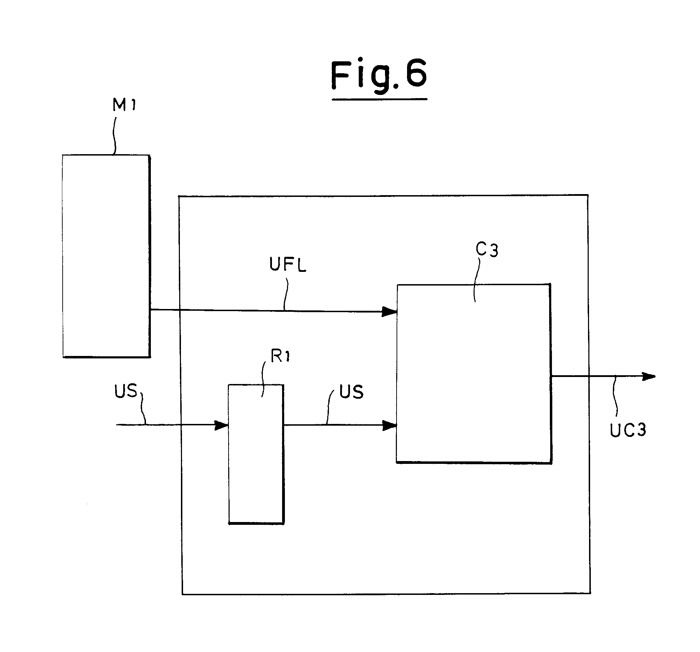

A possible application of the set of flags FLO-FL9 is illustrated in Fig. 6. In it a comparator C3 receives at one of its inputs the set of padding flags and compares it with a threshold padding value US present at input and then at output from a register R. The result of the comparison is available as an output flag UC3 from the comparator C3. Its presence in fact indicates that the memory buffer's padding threshold has been exceeded.

## Claims

1. Asynchronous access FIFO memory buffer, comprising output pins for indications or flags (FF, EF) of buffer completely full and buffer completely empty, characterized in that it also comprises a set of output pins for padding flags (FLO-FL9) with the binary code of the degree of padding of the buffer and output pins for flags (HDF; CF) corresponding to a preset number of bytes in the memory buffer.

2. Memory buffer according to claim 1, characterised in that it comprises a first and a second counter (C1, C2) of the bytes written and read, respectively, in the memory buffer, an arithmetic means (ADDER) suitable for calculating the difference between the number of bytes counted by said first and said second counter (C1, C2), a storage register (R) for said difference connected at output to said arithmetic means (ADDER) and provided with said output pins for said flags of buffer completely full and empty (FF, EF), of padding (FLO-FL9) and of preset numbers of bytes in the memory buffer (HDF, CF) and a synchronizer (S1) suitable for synchronizing the operations of writing/reading the bytes and those of issuing the flags.

3. Memory buffer according to claim 1, characterised in that one of said preset numbers of bytes in the memory buffer is equal to a header, that is 5 bytes, of an ATM cell.

4. Memory buffer according to claim 3, characterised in that the other of said preset numbers of bytes in the memory buffer is equal to 53 bytes of an ATM cell, that is the equivalent of a complete ATM cell.
